# EUROPEAN PATENT SPECIFICATION

(11) **EP 2 739 996 B1**
(45) Date of publication and mention of the grant of the patent: **22.06.2016**
(21) Application number: 12819329.9
(22) Date of filing: 26.06.2012
(51) Int. Cl.: B29C 65/48, B29C 65/00, B29L 11/00, G01L 11/02, G01L 1/24, G01K 11/32, G01V 8/10, G01V 8/24, G02B 6/36

(54) **OPTICAL FIBER SENSOR AND METHOD FOR ADHERING AN OPTICAL FIBER TO A SUBSTRATE**
GLASFASERSENSOR UND VERFAHREN ZUR BEFESTIGUNG EINER GLASFASER AN EINEM SUBSTRAT
CAPTEUR DE FIBRE OPTIQUE ET PROCÉDÉ PERMETTANT DE FAIRE ADHÉRER UNE FIBRE OPTIQUE À UN SUBSTRAT

(30) Priority: 03.08.2011 US 201113197499
(43) Date of publication of application: 11.06.2014
(73) Proprietor: Baker Hughes Incorporated, Houston, TX 77210-4740 (US)
(72) Inventor: LAING, Malcolm S., Blacksburg, Virginia 24060 (US); HOMA, Daniel S., Blacksburg, Virginia 24060 (US); HARMAN, Robert M., Troutville, Virginia 24175 (US); LAMBERT, Christopher H., Christiansburg, Virginia 24073 (US)
(74) Representative: Mabey, Katherine Frances
(86) International application number: PCT/US2012/044230
(87) International publication number: WO 2013/019337

(56) References cited:
- EP-A2- 1 124 112
- WO-A1-02/100794
- WO-A1-2007/137429
- WO-A1-2010/149651
- JP-A- 2004 212 438
- US-B1- 6 236 774
- US-B2- 7 865 044
- INGA A RONOVA ET AL: "Influence of chemical structure on glass transition temperature of polyimides", STRUCTURAL CHEMISTRY, KLUWER ACADEMIC PUBLISHERS-PLENUM PUBLISHERS, NE, vol. 21, no. 5, 25 June 2010 (2010-06-25), pages 1013-1020, XP019830763, ISSN: 1572-9001

## Description

### CROSS REFERENCE TO RELATED APPLICATIONS

This application claims the benefit of U.S. Application No. 13/197499, filed on August 3, 2011.

### BACKGROUND

Optical fibers find use in a variety of applications. For example, in the drilling and completion industry, optical fibers are utilized to measure various conditions in a downhole environment as well parameters of downhole components. Exemplary optical fiber sensors include temperature sensors and strain sensors, which can be used to monitor deformation in downhole components. For applications such as strain sensing, it is important that optical fibers used in sensing be firmly attached or otherwise fixed in place relative to the components for which sensing is utilized. In addition, mechanisms for affixing optical fibers to substrates must also be able to withstand elevated temperatures and other conditions encountered downhole.

An optical fiber senser is disclosed in EP 1124112 A2.

### SUMMARY OF THE INVENTION

The present invention provides an optical fiber sensing apparatus as recited in claim 1, and a method of manufacturing an optical fiber sensing apparatus as recited in claim 6.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a perspective view of an embodiment of a fiber optic sensing assembly including a polyimide coated optical fiber sensor adhered to a substrate;
FIG. 2 is a cross-sectional view of another embodiment of the fiber optic sensing assembly of FIG. 1;
FIG. 3 is a cross-sectional view of another embodiment of the fiber optic sensing assembly of FIG. 1;
FIG. 4 is a cross-sectional view of an embodiment of an optical fiber cable including one or more strain sensing optical fibers;
FIG. 5 is a cross-sectional view of an embodiment of an optical fiber cable including one or more strain sensing optical fibers;
FIG. 6 is a side cross-sectional view of an embodiment of a downhole measurement system; and
FIG. 7 is a flow chart illustrating an embodiment of a method of manufacturing a fiber optic sensing assembly.

### DETAILED DESCRIPTION

Fiber optic sensors configured for measuring parameters such as strain, stress and deformation, as well as other parameters such as temperatures and pressure, are provided herein. In one embodiment, such sensors are incorporated in a downhole assembly for measuring parameters of components such as downhole tools, borehole strings and bottom hole assemblies (BHAs). An exemplary optical fiber sensing assembly includes an optical fiber coated with a protective layer made of a polyimide material, which is adhered to a substrate via the polyimide material. In one embodiment, the substrate is a metallic substrate for which parameters such as strain and deformation are to be measured. The assembly includes a deformable member such as a tube that is deformable in response to pressure and/or other forces. Such forces include, for example, axial forces and internal pressures exerted on the deformable member, e.g., in a downhole environment.

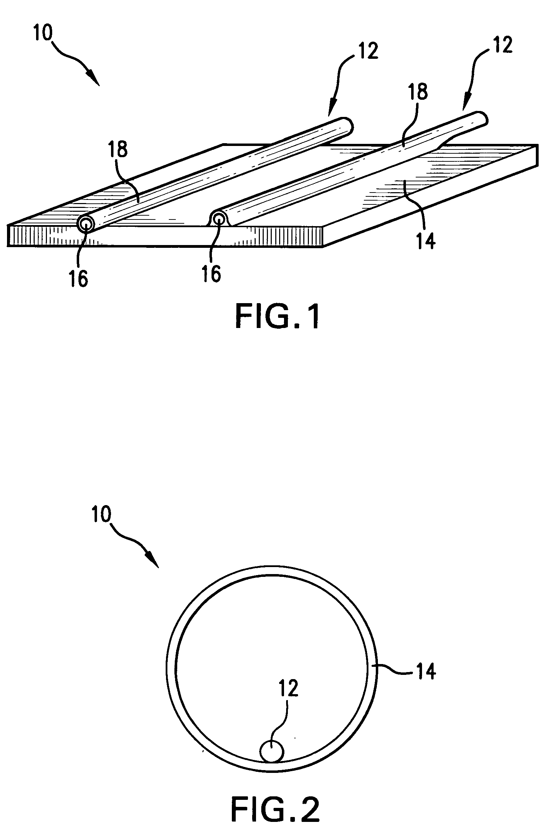

Referring to FIG. 1, a fiber optic sensing assembly 10 includes an optical fiber sensor 12 that is adhered to at least a portion of a substrate 14. In one embodiment, the substrate is made from a metallic material such as stainless steel or aluminum. The substrate may also be made from other suitable materials including ceramics and plastics such as polyetheretherketone (PEEK), Hytrel and polytetrafluoroethylene (PTFE). The optical fiber sensor 12 includes an optical fiber 16 having a polyimide coating or outer layer 18. The optical fiber sensor 12, in one embodiment, includes an optical fiber 16 having one or more measurement locations such as fiber Bragg gratings (FBG) located along the length of the optical fiber sensor 12. Other measurement units may include lengths or regions of the optical fiber sensor 12 utilized for the detection of intrinsic scattering such as Rayleigh, Raman or Brillouin scattering signals. The substrate 14 may be any member deformable by a force and/or pressure, and need not take the specific shapes and configurations described herein. The sensing assembly 10 is configured to estimate various parameters exerted at various locations on the substrate 14 and/or the fiber 16. Examples of such parameters include external and internal parameters such as strain, pressure and other forces.

In accordance with the apparatus of the invention, the optical fiber sensor 12 is adhered to the substrate 14 via a polyimide material, which is provided by the polyimide coating 18. Exemplary polyimides include polyimides having a high glass transition temperature (Tg), such as a Tg greater than about 250 degrees C. In one embodiment, the polyimide materials have a Tg that is greater than temperatures found in a downhole environment. Examples of such polyimide materials include thermoplastic polyimides (TPI) such as PEEK and commercially available PI-2611 and PI-2525 from HD Microsystems, and composite polyimide materials such as composite polyimide/acrylate materials.

In accordance with the apparatus of the invention, the optical fiber sensor 12 includes a core for transmission of optical signals, such as a silica core, and a cladding such as a doped silica cladding. The polyimide coating 18 is adhered directly to the exterior surface of the cladding. Thus, the optical fiber sensor 12 consists of only three layers, i.e., the core, the cladding and a polyimide material that acts as both a protective coating and an adhesive to secure the optical fiber sensor 12 in a fixed position relative to the substrate 14.

Deformation of the substrate, such as bending, expansion or contraction, causes effects such as micro-bends in the optical fiber 16, which in turn cause a change (e.g., a wavelength shift) in the signal returned by the measurement units. This signal change can be used to determine the deformation and estimate force and/or pressure based on the deformation. The optical fiber sensor 12 may be in communication with a user, control unit or other processor or storage device via suitable communication mechanisms.

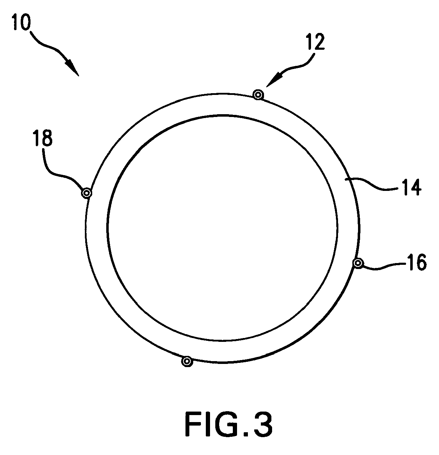

FIGS. 2 and 3 illustrates other embodiments of the sensing assembly 10. In these embodiments, one or more optical fiber sensors 12 having a polyimide coating 18 are adhered via the polyimide coating 18 to a tubular substrate 14. Examples of the tubular substrate include sections of a borehole string, such as a drill string or production string configured to be disposed in a borehole in an earth formation.

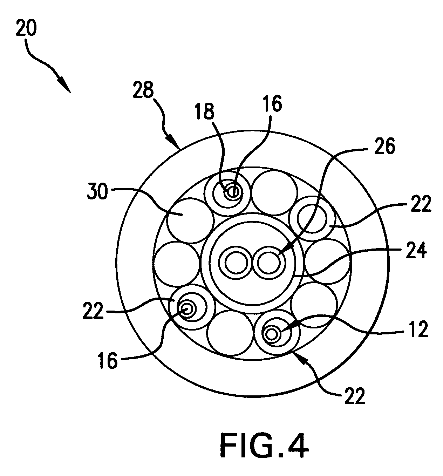

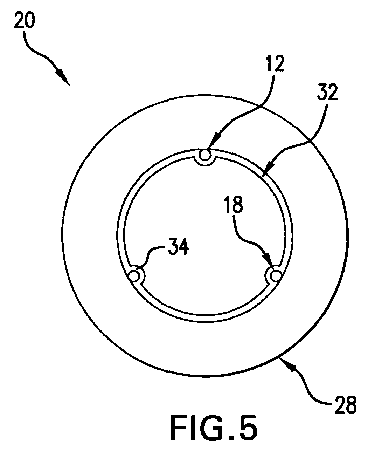

FIGS. 4 and 5 illustrate exemplary embodiments of a fiber optic cable 20. The cable 20 may be configured as a strain sensing cable that is disposed with a deformable component such as a borehole string or downhole tool to measure parameters such as strain and deformation of the component. Other parameters such as temperature and pressure may also be measured using the cable 20. For example, all of the embodiments described herein can allow for the incorporation of additional optical fibers for other sensing technologies such as, but not limited to, distributed temperature sensing (DTS), acoustic sensing, and single point pressure/temperature sensing. The exemplary cables 20 described herein include multiple optical fiber sensors 12, although the number and configurations of the optical fiber sensors 12 are not so limited.

Referring to FIG. 4, an embodiment of the cable 20 includes one or more strain sensing optical fiber sensors 12 including fibers 16 that are encapsulated within and adhered to metal tubes 22, referred to as "Fiber in Metal Tube" or FIMTs. The strain sensing fibers 16 are adhered to the metal tubes 22 via a polyimide coating 18. The metal tubes 22 are in turn wrapped around or otherwise disposed adjacent to a central member 24. The central member 24, in one embodiment, is configured as a strength member, such as a solid metal or polymer tube. In one embodiment, the central member 24 is configured to hold therein additional cable components, such optical fibers for temperature (or other parameter) sensing or communication. The central member may also hold other components such as copper or other electrically conductive wires or tubes 26. The components of the cable 20 are disposed within an outer protective layer 28. In one embodiment, the optical fiber sensors 12 including the strain sensing fibers 16 have a total outside diameter that is large enough to contact components such as the metal tube 22, (e.g., on the order of 300-400µm). In this embodiment, a large diameter fiber (e.g., about 200µm) may be used.

The embodiment shown in FIG. 4 includes FIMT members having the fiber sensors 12 disposed in the metal tubes 22 and additional wires 30, all of which are disposed around the central member 24. However, the cable 20 is not so limited, and may have various components and configurations, such as additional optical fibers disposed in the metal tubes 22 and/or in the central member 24.

Referring to FIG. 5, an embodiment of the cable 20 includes one or more optical fiber sensors disposed on and adhered to a central member or cable core 32. The cable core 32 includes passages or grooves 34 extending along the cable core 32 surface, for example, in an axial or helical path. The fiber optic sensors 12 are disposed in and adhered to surfaces of the grooves 34 via their respective polyimide coatings. The cable core 32 may be a solid core or may be configured to accommodate additional cable components, such as the FIMTs, wires 26 and additional optical fibers. For example, the cable core 32 may have additional grooves or spaces disposed near its surface, or may be hollow to accommodate the additional components.

The components and configurations of the cables are not limited to the embodiments described herein. For example, the cables 20 may include other components such as additional electrical conductors for supplying power or communication. Furthermore, the type or configuration of the substrates is not limited.

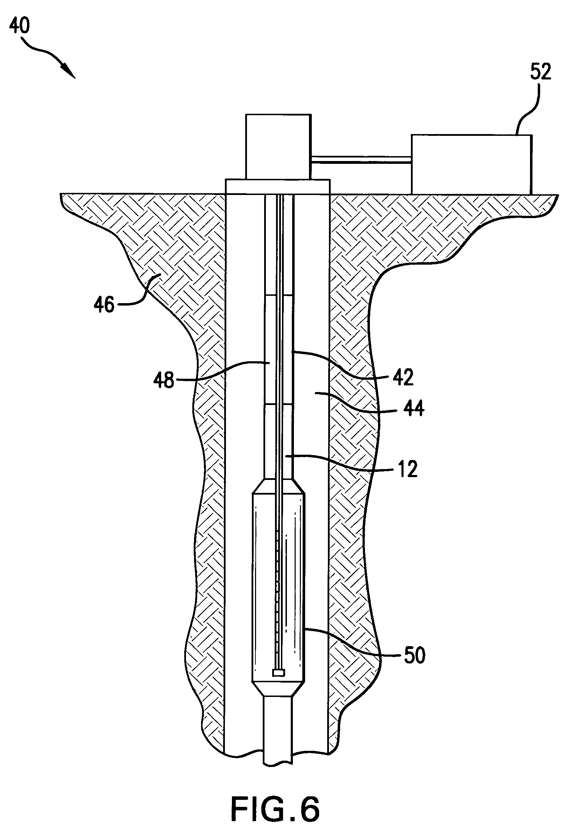

Referring to FIG. 6, an exemplary embodiment of a subterranean well drilling, evaluation, exploration and/or production system 40 includes a borehole string 42 that is shown disposed in a borehole 44 that penetrates at least one earth formation 46 during a subterranean operation. The borehole string 42 includes any of various components to facilitate subterranean operations. As described herein, "borehole" or "wellbore" refers to a single hole that makes up all or part of a drilled well. As described herein, "formations" refer to the various features and materials that may be encountered in a subsurface environment and surround the borehole.

The borehole string 42 includes one or more pipe sections 48 or coiled tubing that extend downward into the borehole 44. In one example, the system 40 is a drilling system and includes a drill bit assembly. The system 40 may also include a bottomhole assembly (BHA). The system 40 and/or the borehole string 42 include any number of downhole tools 50 for various processes including drilling, hydrocarbon production, and formation evaluation (FE) for measuring one or more physical quantities in or around a borehole.

In one embodiment, the system 40, the tools 50, pipe sections 48, the borehole string 42 and/or the BHA include at least one pressure, strain and/or force sensor, such as the optical fiber sensor 12 and/or the strain sensing cable 20. The pressure and/or force sensor is configured to measure various forces on system components, in the borehole 44 and/or in the surrounding formation. Exemplary forces include pressure from drilling, production and/or borehole fluids, pressure from formation materials, and axial and/or radial force on components of the borehole string 42, tool 50 or other downhole components of the system 40.

In one embodiment, the tool 50 and/or optical fiber sensor 12 are equipped with transmission equipment to communicate ultimately to a surface processing unit 52. Such transmission equipment may take any desired form, and different transmission media and connections may be used. The surface processing unit 52 and/or other components of the system 40 include devices as necessary to provide for storing and/or processing data collected from the optical fiber sensor 12 and other components of the system 40. Exemplary devices include, without limitation, at least one processor, storage, memory, input devices, output devices and the like.

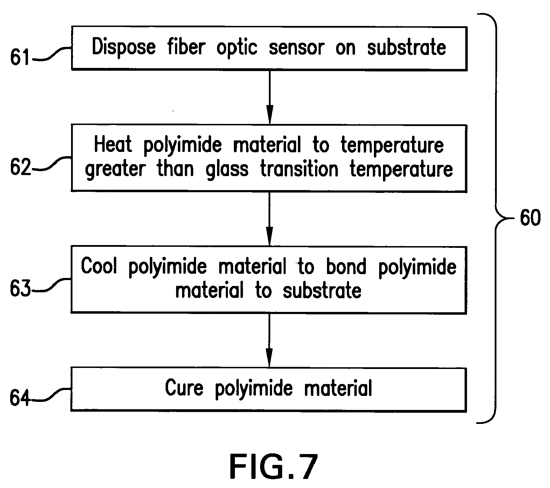

FIG. 7 illustrates a method 60 of manufacturing a fiber optic sensing apparatus. The method 60 includes one or more stages 61-64. Although the method 60 is described in conjunction with the optical fiber sensor 12, substrate 14 and components of the cable 20, the method 60 is not limited to use with these embodiments. In one embodiment, the method 60 includes the execution of all of stages 61-64 in the order described. However, certain stages may be omitted, stages may be added, or the order of the stages changed.

In the first stage 61, a polyimide coated optical fiber sensor such as the sensor 12 is disposed on a surface of a substrate that is configured to deform in response to an environmental parameter. Examples of the substrate include the substrate 14, and cable components such as metal tubes 22, central member 24, wires 30 and cable core 32.

In the second stage 62, polyimide material making up the coating 18 and/or additional polyimide material is bonded to the substrate 14. In one embodiment, a liquid polyimide is applied to the optical fiber sensor 12 and the substrate is allowed to harden and cure (at room temperature or at another selected temperature) to form a bond between the optical fiber sensor and the substrate. In one embodiment, polyimide material making up the coating 18 is heated to beyond the glass transition temperature of the polyimide material. In one embodiment, only the polyimide coating 18 is used and heated. In yet another embodiment, the coating 18 is not directly heated, but rather liquid polyimide is applied to the fiber 12 and the substrate.

In the third stage 63, the polyimide material is allowed to cool or may be actively cooled to a temperature below the glass transition point. For example, the polyimide material is allowed to cool to room temperature. The cooling allows the polyimide to harden and bond to the substrate 14.

In the fourth stage 64, the cooled polyimide is optionally cured for a period of time to improve the bond between the polyimide and the substrate. For example, the polyimide is heated to an intermediate temperature such as 150 degrees C for a selected period of time, e.g., at least about 16 hours.

There is provided a method of measuring an environmental or component parameter in a downhole system using the fiber optic sensing assembly 10. In a first stage, the optical fiber sensor 12 and/or cable 20 is deployed in the borehole 44 via the borehole string 42 and/or via other components, such as a drilling assembly or measurement sub. In a second stage, one or more signals are transmitted into the optical fiber sensor 12. For example, interrogation signals are transmitted into the optical fiber sensor 12 from the surface processing unit 52, and measurement locations such as Bragg gratings or Rayleigh scattering sections of the optical fiber sensor 12 reflect signals indicative of parameters such as strain and deformation.

The apparatuses and methods described herein provide various advantages over existing methods and devices. The sensing assemblies provide for effective strain sensing at high temperatures, as well as providing a substantially creep-free bond at high temperatures. Creep generally refers to degradation or other changes in a fiber sensor coating (e.g., adhesive deterioration) that develop over time and affect the detected wavelength shift in an optical fiber sensor. Another advantage is provided by the relatively few number of types of materials (e.g., a single polyimide material as protective coating and adhesive), which minimizes the number of materials used in the sensing apparatus and hence negates many material compatibility challenges that could arise.

In connection with the teachings herein, various analyses and/or analytical components may be used, including digital and/or analog systems. The apparatus may have components such as a processor, storage media, memory, input, output, communications link (wired, wireless, pulsed mud, optical or other), user interfaces, software programs, signal processors (digital or analog) and other such components (such as resistors, capacitors, inductors and others) to provide for operation and analyses of the apparatus and methods disclosed herein in any of several manners well-appreciated in the art. It is considered that these teachings may be, but need not be, implemented in conjunction with a set of computer executable instructions stored on a computer readable medium, including memory (ROMs, RAMs), optical (CD-ROMs), or magnetic (disks, hard drives), or any other type that when executed causes a computer to implement the method of the present invention. These instructions may provide for equipment operation, control, data collection and analysis and other functions deemed relevant by a system designer, owner, user or other such personnel, in addition to the functions described in this disclosure.

While the invention has been described with reference to exemplary embodiments, it will be understood by those skilled in the art that various changes may be made and equivalents may be substituted for elements thereof without departing from the scope of the invention. In addition, many modifications will be appreciated by those skilled in the art to adapt a particular instrument, situation or material to the teachings of the invention without departing from the essential scope thereof. Therefore, it is intended that the invention not be limited to the particular embodiment disclosed as the best mode contemplated for carrying out this invention.

## Claims

1. An optical fiber sensing apparatus comprising:
a substrate (14) configured to deform in response to an environmental parameter;
an optical fiber sensor (12) including a core having at least one measurement location disposed therein, a cladding, and a protective coating (18) surrounding the optical fiber sensor (12), the protective coating (18) made from a polyimide material, the polyimide material adhered directly to an exterior surface of the cladding; and
an adhesive configured to adhere the optical fiber sensor (12) to the substrate (14), the adhesive made from the polyimide material;
wherein a single layer of the polyimide material contacts the exterior surface of the cladding and contacts the substrate, the single layer forming both the protective coating and the adhesive.

2. The apparatus of claim 1, wherein the substrate (14) is a component configured to be disposed in a downhole location.

3. The apparatus of claim 1 or 2, wherein the environmental parameter is selected from at least one of a temperature, a pressure and a force on the component.

4. The apparatus of claim 1, 2 or 3, wherein the protective coating is directly adhered to the substrate (14).

5. The apparatus of any preceding claim, wherein the optical fiber sensor (12) is a distributed optical fiber sensor including a plurality of measurement locations arrayed along a length of the core.

6. A method (60) of manufacturing an optical fiber sensing apparatus comprising:
disposing an optical fiber sensor (12) on a surface of a substrate (14) configured to deform in response to an environmental parameter, the optical fiber sensor (12) including a core having at least one measurement location disposed therein and a protective coating (18) surrounding the optical fiber sensor (12), the protective coating (18) made from a polyimide material; and
applying the polyimide material and bonding the polyimide material to the substrate (14), wherein the applying includes:
heating the polyimide material and subsequently cooling the polyimide material and the substrate (14) to bond the polyimide material to the substrate (14); and/or
applying a liquid polyimide adhesive to the protective coating (18) and the substrate (14).

7. The method (60) of claim 6, wherein further comprising curing the polyimide material for a selected period of time and at a temperature sufficient to form or improve the bond between the polyimide material and the substrate (14).

8. The method (60) of claim 7, wherein heating the polyimide material includes heating the protective coating (18).

9. The method of claim 6, 7 or 8, wherein the applying includes heating the polyimide material to a temperature greater than a glass transition temperature of the polyimide material.

10. The method (60) of any of claims 6 to 9, wherein the optical fiber sensor (12) includes the core, a cladding surrounding the core, and the polyimide coating (18) attached to an exterior surface of the cladding.

11. The apparatus of any of claims 1 to 5, or the method (60) of any of claims 6 to 9, wherein the polyimide material has a glass transition temperature that is greater than about 250 degrees C.

12. The apparatus of any of claims 1 to 5, or the method (60) of any of claims 6 to 11, wherein the substrate is made from at least one of a metallic material, a ceramic material and a plastic material.

13. The apparatus of any of claims 1 to 5, or the method (60) of any of claim 6 to 12, wherein the optical fiber sensing apparatus is configured as part of a strain sensing cable (20), and the substrate (14) is a metallic tubular member disposed within the cable (20).

## Patentansprüche

1. Ein Glasfaser-Sensorgerät, umfassend:
- ein Substrat (14), das konfiguriert ist, um sich in Beantwortung eines Umweltparameters zu deformieren;
- ein Glasfaser-Sensor (12) mit einem Kern, der mindestens eine sich darin befindende Messstelle besitzt, einer Verkleidung und einer Schutzbeschichtung (18), die den Glasfaser-Sensor (12) umhüllt, wobei die Schutzschicht (18) aus einem Polyimid besteht, und wo das Polyimid direkt an einer Außenfläche der Verkleidung anhaftet; und
- einen Kleber, der konfiguriert ist, um den Glasfaser-Sensor (12) an das Substrat (14) zu kleben, wobei der Kleber aus einem Polyimid ist;
wobei eine einzelne Schicht des Polyimids mit der Außenfläche der Verkleidung in Kontakt steht und mit dem Substrat in Kontakt steht, wo die einzelne Schicht sowohl die Schutzschicht als auch den Kleber bildet.

2. Das Gerät gemäß Anspruch 1, wobei das Substrat (14) eine Komponente ist, die konfiguriert ist, um an einem Ort Untertage angeordnet zu werden.

3. Das Gerät gemäß Anspruch 1 oder 2, wobei der Umweltparameter mindestens einer von folgenden ist: Temperatur, Druck oder eine Krafteinwirkung auf die Komponente.

4. Das Gerät gemäß Anspruch 1, 2, oder 3, wobei die Schutzschicht direkt an das Substrat (14) geklebt wird.

5. Das Gerät gemäß einem der vorstehenden Ansprüche, wobei der Glasfaser-Sensor (12) ein verteilter Glasfaser-Sensor mit einer Vielzahl an Messstellen ist, die über eine Länge des Kerns verteilt sind.

6. Ein Verfahren (60) zur Herstellung eines Glasfaser-Sensorgeräts, das folgende Schritte umfasst:
- Anordnung eines Glasfaser-Sensors (12) auf der Oberfläche eines Substrats (14), das konfiguriert ist, um sich in Beantwortung eines Umweltparameters zu deformieren, wobei der Glasfaser-Sensor (12) einen Kern, der mindestens eine sich darin befindende Messstelle besitzt, sowie eine Schutzbeschichtung (18) aufweist, die den Glasfaser-Sensor (12) umhüllt, wobei die Schutzschicht (18) aus einem Polyimid besteht; und
- Auftragen und Kleben des Polyimids direkt auf dem Substrat (14), wobei das Auftragen folgendes umfasst:
Erwärmen des Polyimids und anschließendes Kühlen des Polyimids und des Substrats (14), um das Polyimid mit dem Substrat (14) zu verkleben; und/oder
Auftragen eines flüssigen Polyimid-Klebers auf die Schutzschicht (18) und das Substrat (14).

7. Das Verfahren (60) gemäß Anspruch 6, wobei es darüber hinaus ein Aushärten des Polyimids während einer ausgewählten Zeitspanne und bei einer ausreichenden Temperatur umfasst, um ein Bonding zwischen dem Polyimid und dem Substrat (14) zu erzielen oder dieses zu verbessern.

8. Das Verfahren (60) gemäß Anspruch 7, wo das Erwärmen des Polyimids das Erwärmen der Schutzschicht (18) umfasst.

9. Das Verfahren gemäß Anspruch 6, 7 oder 8, wobei das Auftragen die Erwärmung des Polyimids auf eine Temperatur umfasst, die höher ist als die Glasübergangstemperatur des Polyimids.

10. Das Verfahren (60) gemäß einem der vorstehenden Ansprüche 6 bis 9, wobei der Glasfaser-Sensor (12) einen Kern, eine den Kern umhüllende Verkleidung und die Polyimidschicht (18) umfasst, die an einer Außenseite der Verkleidung befestigt ist.

11. Das Gerät gemäß einem der vorstehenden Ansprüche 1 bis 5, oder das Verfahren (60) gemäß einem der vorstehenden Ansprüche 6 bis 9, wobei das Polyimid eine Glasübergangstemperatur von mehr als ca. 250 °C hat.

12. Das Gerät gemäß einem der vorstehenden Ansprüche 1 bis 5, oder das Verfahren (60) gemäß einem der vorstehenden Ansprüche 6 bis 11, wobei das Substrat aus mindestens einem metallischen Material, einem keramischen Material und einem Kunststoffmaterial besteht.

13. Das Gerät gemäß einem der vorstehenden Ansprüche 1 bis 5, oder das Verfahren (60) gemäß einem der vorstehenden Ansprüche 6 bis 12, wobei das Glasfaser-Sensorgerät als Teil eines Belastungserfassungskabels (20) konfiguriert ist, und das Substrat (14) eine rohrförmiges Metallglied ist, welches in dem Kabel (20) angeordnet ist.

## Revendications

1. Appareil de détection à fibre optique comprenant :
un substrat (14) configuré pour se déformer en réponse à un paramètre environnemental ;
un capteur à fibre optique (12) incluant une âme ayant au moins un emplacement de mesure disposé en son sein, un placage, et un revêtement protecteur (18) entourant le capteur à fibre optique (12), le revêtement protecteur (18) étant fait d'une matière de polyimide, la matière de polyimide adhérant directement à une surface extérieure du placage ; et
un adhésif configuré pour faire adhérer le capteur à fibre optique (12) au substrat (14), l'adhésif étant fait de la matière de polyimide ;
dans lequel une couche simple de la matière de polyimide entre en contact avec la surface extérieure du placage et entre en contact avec le substrat, la couche simple formant tant le revêtement protecteur que l'adhésif.

2. Appareil selon la revendication 1, dans lequel le substrat (14) est un composant configuré pour être disposé dans un emplacement de fond.

3. Appareil selon la revendication 1 ou 2, dans lequel le paramètre environnemental est sélectionné à partir d'au moins une d'une température, d'une pression et d'une force sur le composant.

4. Appareil selon la revendication 1, 2 ou 3, dans lequel le revêtement protecteur adhère directement au substrat (14).

5. Appareil selon l'une quelconque des revendications précédentes, dans lequel le capteur à fibre optique (12) est un capteur à fibre optique réparti incluant une pluralité d'emplacements de mesure agencés le long d'une longueur de l'âme.

6. Procédé (60) de fabrication d'un appareil de détection à fibre optique comprenant :
la disposition d'un capteur à fibre optique (12) sur une surface d'un substrat (14) configuré pour se déformer en réponse à un paramètre environnemental, le capteur à fibre optique (12) incluant une âme ayant au moins un emplacement de mesure disposé en son sein et un revêtement protecteur (18) entourant le capteur à fibre optique (12), le revêtement protecteur (18) étant fait d'une matière de polyimide ; et
l'application de la matière de polyimide et la liaison de la matière de polyimide au substrat (14), dans lequel l'application inclut :
le chauffage de la matière de polyimide et le refroidissement par la suite de la matière de polyimide et du substrat (14) pour lier la matière de polyimide au substrat (14) ; et/ou
l'application d'un adhésif de polyimide liquide au revêtement protecteur (18) et au substrat (14).

7. Procédé (60) selon la revendication 6, dans lequel il comprend en outre la cuisson de la matière de polyimide pendant une période de temps sélectionnée et à une température suffisante pour former ou améliorer la liaison entre la matière de polyimide et le substrat (14).

8. Procédé (60) selon la revendication 7, dans lequel le chauffage de la matière de polyimide inclut le chauffage du revêtement protecteur (18).

9. Procédé selon la revendication 6, 7 ou 8, dans lequel l'application inclut le chauffage de la matière de polyimide à une température supérieure à une température de transition vitreuse de la matière de polyimide.

10. Procédé (60) selon n'importe laquelle des revendications 6 à 9, dans lequel le capteur à fibre optique (12) inclut l'âme, un placage entourant l'âme, et le revêtement de polyimide (18) attaché à une surface extérieure du placage.

11. Appareil selon l'une quelconque des revendications 1 à 5, ou procédé (60) selon l'une quelconque des revendications 6 à 9, dans lequel la matière de polyimide a une température de transition vitreuse qui est plus grande d'environ 250 degrés °C.

12. Appareil selon l'une quelconque des revendications 1 à 5, ou procédé (60) selon l'une quelconque des revendications 6 à 11, dans lequel le substrat est fait d'au moins une d'une matière métallique, d'une matière céramique et d'une matière en plastique.

13. Appareil selon l'une quelconque des revendications 1 à 5, ou procédé (60) selon l'une quelconque des revendications 6 à 12, dans lequel l'appareil de détection à fibre optique est configuré en tant que partie d'un câble de détection de contrainte (20), et le substrat (14) est un élément tubulaire métallique disposé à l'intérieur du câble (20).
